# EUROPÄISCHE PATENTSCHRIFT

(11) **EP 0 828 546 B1**
(45) Veröffentlichungstag und Bekanntmachung des Hinweises auf die Patenterteilung: **23.06.1999**
(21) Anmeldenummer: 96902280.5
(22) Anmeldetag: 16.02.1996
(51) Int. Cl.: B01D 46/24, F02M 35/024

(54) **LUFTFILTER, INSBESONDERE FÜR DIE REINIGUNG VON VERBRENNUNGSLUFT FÜR BRENNKRAFTMASCHINEN**
AIR FILTER, ESPECIALLY FOR CLEANING COMBUSTION AIR FOR INTERNAL COMBUSTION ENGINES
FILTRE A AIR, EN PARTICULIER POUR L'EPURATION DE L'AIR DE COMBUSTION POUR MOTEUR A COMBUSTION INTERNE

(30) Priorität: 26.05.1995 DE 19519438
(43) Veröffentlichungstag der Anmeldung: 18.03.1998
(73) Patentinhaber: FILTERWERK MANN & HUMMEL GmbH, 71631 Ludwigsburg (DE)
(72) Erfinder: MÖSSINGER, Klaus, D-71482 Obersulm (DE)
(74) Vertreter: Voth, Gerhard, Dipl.-Ing.
(86) Internationale Anmeldenummer: EP9600665
(87) Internationale Veröffentlichungsnummer: WO9637277

(56) Entgegenhaltungen:
- DE-A- 1 544 085
- DE-A- 2 000 827
- DE-C- 4 241 586
- US-A- 3 535 853

## Beschreibung

Die Erfindung betrifft ein Luftfiter, insbesondere für die Ansaugluft von Brennkraftmaschinen.

Ein solches Luftfilter ist aus der DE-PS 42 41 586 bekannt. Dieses bekannte Luftfilter ist universal verwendbar, d. h. es kann sowohl im Kraftfahrzeugbau als auch bei Landmaschinen oder Baumaschinen eingesetzt werden. Die Filtereinsätze dieser Luftfilter werden nach einer bestimmten Betriebszeit ausgetauscht. Je nach Staubanfall kann die Standzeit eines Luftfilters wenige Tage (Baumaschinen) bis zu mehreren Monaten betragen.

Insbesondere bei Maschinen oder Fahrzeugen, die in staubreicher Umgebung eingesetzt werden, ist es erforderlich, den Staub kontinuierlich oder zyklisch aus dem Gehäuse zu entfernen. Hierzu ist bei dem Stand der Technik eine Staubaustragöffnung vorgesehen.

Es hat sich bei solchen Filtereinrichtungen gezeigt, daß unterschiedliche Anwendungsfälle auch Anpassungen hinsichtlich des Filtereinsatzes, der Porengröße bzw. des Zusatzes von Sicherheitselementen o. ä. erforderlich machen. Es ist also zweckmäßig, das Filtersystem an den jeweiligen Anwendungsfall anzupassen, wobei selbstverständlich die Anpassung in wirtschaftlich vertretbarem Rahmen erfolgen soll.

Die Aufgabe der vorliegenden Erfindung liegt daher in der Schaffung eines Filters, welches eine verbesserte Anpassung des Schmutzaustrags für verschiedene Anwendungsfälle ermöglicht.

Diese Aufgabe wird ausgehend von dem Oberbegriff des Hauptanspruchs durch dessen kennzeichnende Merkmale gelöst.

Der Vorteil der Erfindung liegt darin, daß mit einem einzigen Austauschelement eine Baureihe von Filtersystemen geschaffen wird, die optimal an die Betriebsbedingungen anpaßbar ist. Dabei ist das austauschbare Element im wesentlichen ein Teil, das zum einen das Gehäuse des Luftfilters verschließt und zum anderen eine Öffnung zum Austragen des Schmutzes aufweist, welche mit unterschiedlichen Elementen bestückt werden kann bzw. welche selbst so gestaltbar ist, daß eine optimale Staubabscheidung ermöglicht wird.

Gemäß einer vorteilhaften Ausgestaltung der Erfindung ist im Bereich des Rohlufteinlasses ein Zyklon zur Staubvorabscheidung vorgesehen. Dieses Zyklon besteht aus Leitschaufeln, welche eine Drallströmung erzeugen und damit einen hohen Anteil an Schmutz aus der Rohluft abscheiden. Das Zyklon kann als Radial- oder auch als Axialzyklon augestaltet sein. Der ausgeschiedene Schmutz gelangt in das an der Gehäuseöffnung adaptierte System und wird zyklisch oder kontinuierlich ausgetragen.

Zum Schmutzaustrag ist gemäß einer vorteilhaften Ausgestaltung ein Staubentleerventil vorgesehen. Ein Schmutzsammelraum ist im Gehäusedeckel dem Staubentleerventil vorgelagert. Aufgrund der Pulsation der Ansaugluft, welche bei Brennkraftmaschinen durch die Rückwirkung der Ventilbewegungen des Motors entsteht, öffnet bzw. schließt das Staubentleerventil, so daß ein nahezu kontinuierlicher Staubaustrag erfolgt.

In einer Weiterbildung ist der Schmutzsammelraum in das Staubentleerventil integriert. Dieser ergänzt bzw. ersetzt den im Gehäusedeckel angeordneten Schmutzsammelraum.

Eine alternative Weiterbildung der Erfindung besteht in der Anordnung eines Schirmventils an der Schmutzaustragsöffnung. Ein solches Schirmventil weist einen sehr geringen Durchflußwiderstand auf, so daß auch bei sehr schwacher Pulsation ein Staubaustrag erfolgt.

Eine weitere Ausgestaltung der Erfindung, die besonders dort vorteilhaft ist, wo keine Pulsation vorhanden ist, liegt darin, daß im Gehäusedeckel ein Zwischenboden mit einer Öffnung vorgesehen ist. Unterhalb dieses Zwischenbodens sammelt sich der auszutragende Schmutz an. Aufgrund der Zyklonwirkung entsteht in dem Raum unterhalb des Zwischenbodens ein gewisser überdruck, der ausreicht, um das Ventil für den Staubaustrag zyklisch zu öffnen.

Weiterbildungsgemäß kann der integrierte Schmutzaustrag mit einer Einrichtung zum Absaugen des Schmutzes verbunden sein, beispielsweise mit einer Ejektoreinrichtung, wobei der Schmutz dann über die Abgasleitung ins Freie geführt wird.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

Die Erfindung wird nachfolgend anhand von Ausführungsbeispielen dargestellt. Es zeigt:
- Figur 1: ein Filter in Schnittdarstellung,
- Figur 2 a - d: verschiedene Varianten des adaptiven Systems.

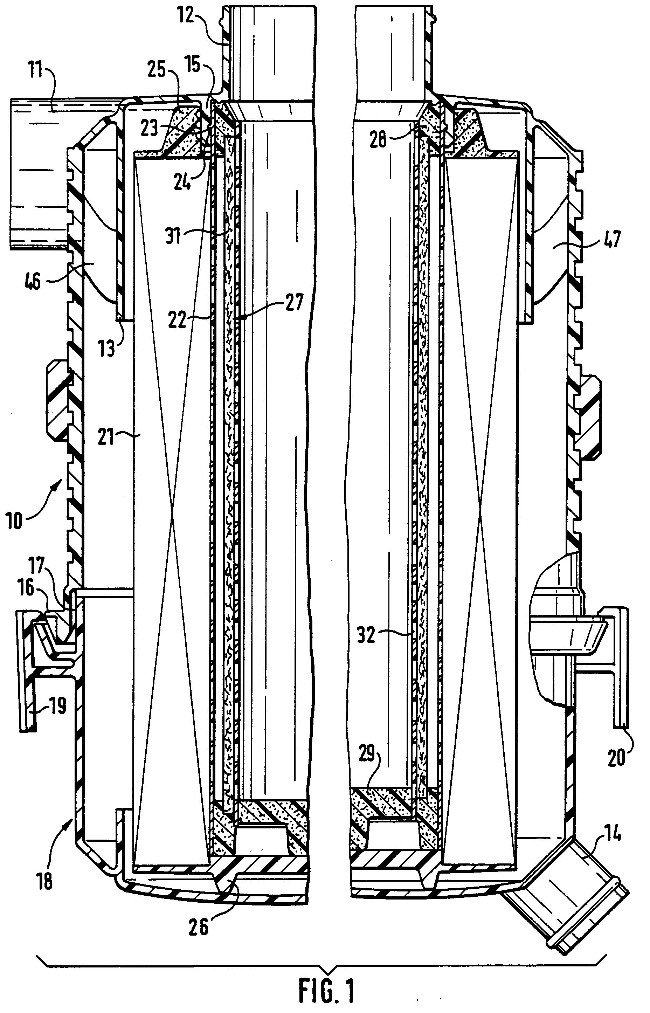

Das in Fig. 1 gezeigte Filter ist in zwei Halbschnitten dargestellt. Der linke Halbschnitt zeigt das Filter mit noch leicht geöffnetem Deckel während der rechte Halbschnitt das Filter mit geschlossenem Deckel zeigt. Das Filter besteht aus einem zylindrischen Gehäuse 10 mit einem Rohlufteinlaß 11 und einem Reinluftauslaß 12. Im Bereich des Rohlufteinlasses ist eine Ableitwandung 13 (Tauchrohr) vorgesehen. In Verbindung mit dem tangential in das Gehäuse 10 einführenden Rohlufteinlaß bildet sich eine Drallströmung der Rohluft. Diese bewirkt ein Abscheiden grober Staubpartikel , wobei diese grobe Staubpartikel an der Innenwandung des Filters nach unten gelangen und über eine Staubaustragöffnung 14, welche mit einem bekannten Staubaustragventil verschlossen ist, ins Freie geführt werden.

Eine zweckmäßige Ausgestaltung eines Filters ist darin zu sehen, daß ein Mittelrohr 22 gehäusefest angeordnet ist. Da dieses Mittelrohr nicht dem Verschleiß bzw. Verbrauch unterliegt, ist ein Austausch nicht erforderlich. Das Mittelrohr, welches insbesondere aus Kunststoff besteht, ist kraftschlüssig mit dem Ansatzrohr des Gehäuses verbunden. Gemäß einer Ausgestaltung der Verbindung Mittelrohr - Ansatzrohr weist das Mittelrohr Dichtlippen auf, die im Verbindungsbereich angeordnet sind und eine zuverlässige Abdichtung gewährleisten. Ein Sekundärelement 27, welches innerhalb eines Filtereinsatzes 21 angeordnet ist wird im Gegensatz zu dem Filtereinsatz nicht gereinigt sondern, falls erforderlich, ausgetauscht. Ein Reinigen, z. B. durch Ausklopfen oder Auswaschen ist nicht zweckmäßig, da durch diesen Reinigungsvorgang das Sekundärelement beschädigt werden kann und damit seine Wirkung verliert. Es ist deshalb mit einem Lösegriff ausgestattet, der erkennen läßt, ob das Sekundärelement herausgenommen worden ist. Dieser Lösegriff weist eine Grifflasche auf, die aus Kunststoff besteht und mit einer Schwimmhaut mit dieser Endscheibe verbunden ist. Soll das Sekundärelement entfernt werden, so ist diese Schwimmhaut aufzureißen und die Grifflasche hochzuziehen. Mit dieser Grifflasche kann das Sekundärelement ausgebaut werden. Da die Grifflasche sich nunmehr in dem geöffneten Zustand befindet, ist sofort erkennbar, daß das Sekundärelement entfernt wurde. Gemäß einer weiteren Ausgestaltung ist das Sekundärelement mit einer radialen und/oder axialen Abdichtung versehen. Insbesondere die Axialabdichtwirkung wird durch einen Wulst am Ansatzrohr unterstützt.

Das Gehäuse 10 ist ferner mit einem Ansatzrohr 15, sowie mit einem umlaufenden Rastvorsprung 16 und einer zylinderförmigen Aufnahme 17 für einen Deckel 18, versehen. Der Deckel 18 ist topfförmig ausgebildet und weist wenigstens zwei Rastelemente 19, 20 auf. Diese Rastelemente sind schwenkbar mit dem Deckel über sogenannte Biegescharniere verbunden und werden mit dem Deckel gemeinsam in einem Arbeitsgang aus Kunststoff hergestellt. Sie greifen über den Rastvorsprung 16 des Gehäuses 10. Im linken Teilschnitt der Fig. 1 ist das Rastelement 19 in der Offenstellung gezeigt. Im rechten Teilschnitt bzw. in der ausgeschnittenen Ansicht ist das Rastelement 20 in geschlossener Stellung dargestellt.

An dem Ansatzrohr 15 des Gehäuses 10 ist ein Metall- oder Kunststoff-Mittelrohr 22 befestigt. Zur formschlüssigen Befestigung dieses Mittelrohrs ist dieses mit einem Wulst 23 versehen, welche in eine Nut 24 des Ansatzrohres 15 einrastet. Ein unbeabichtigtes Entfernen des Mittelrohres ist damit nicht mehr möglich.

über das Mittelrohr 22 ist ein Filtereinsatz 21 geschoben. Dieser Filtereinsatz trägt an seiner oberen Stirnfläche eine Radialdichtung, welche mit der Endscheibe des Filtereinsatzes eine Einheit bildet. Diese Radialdichtung besteht aus einem umlaufenden und außerhalb der Filterebene liegenden Wulst 25. Der Wulst 25 umfasst abdichtend das Ansatzrohr 15. Bei dieser Dichtungsart spielt eine axiale Lageänderung des Filtereinsatzes eine unerhebliche Rolle. Außerdem ist diese Art der Abdichtung auch bei Erschütterungen und Schwingungen äußerst zuverlässig.

Der Filtereinsatz 21 stützt sich an seinem rückwärtigen Ende über Noppen 26 an dem Deckel 18 ab. Diese Noppen, die auch als Deformationsrippen ausgestaltet sein können, dienen zur axialen Fixierung des Filtereinsatzes und zur Schwingungsdämpfung der in dem rückwärtigen Bereich lediglich auf dem Mittelrohr 22 freifliegend angeordneten Patrone. Innerhalb des Mittelrohrs 22 ist ein Sekundärelement 27 angeordnet. Dieses ist an seinem vorderen Ende mit einer PUR-Schaum-Stirnflächenabdichtung 28 versehen. Diese Stirnflächenabdichtung ist kraftschlüssig mit dem Ansatzrohr 15 verbunden. Das rückwärtige Ende des Sekundärelements 27 ist mit einer PUR-Schaum-Stirnseitenabichtung 29 versehen. In diese Endscheibe 29 ist ein Kunststoffgriff integriert, der dazu dient, das Sekundärelement nötigenfalls manuell zu entfernen. Das Sekundärelement besteht zweckmäßigerweise aus einem Vlies 31 welches auf ein Stützrohr 32 geschoben ist. Die axiale Kraft zur Abdichtung des Sekundärelements an dem Reinluftausgang wird über den Deckel 18 und die Noppen 26 des Filtereinsatzes 21 auf die Stirnseitenabdichtung 29 aufgebracht.

Da das Sekundärelement 27 vollständig von dem Mittelrohr 22 umschlossen ist, besteht nicht die Gefahr, daß beim Austausch des Filtereinsatzes das Sekundärelement versehentlich herausgenommen wird oder herausfällt.

Beim Zusammenbau des gesamten Filters wird zunächst das Sekundärelement eingesteckt, anschließend der Filtereinsatz 21 darübergeschoben und der Deckel 18 aufgesetzt. Durch die Abstützung des Sekundärelements an dem Filtereinsatz 21 am rückwärtigen Ende und gleichzeitig die Abstützung des Filtereinsatzes 21 an dem Deckel 18 werden durch das Aufschieben des Deckels beide Elemente in ihre lagerichtige Position gebracht. Dies bedeutet, daß eine Falschmontage der beiden Elemente nicht möglich ist. Die Endlage dieser Elemente wird durch Verschließen des Deckels 18 an der Aufnahme 17 erreicht.

Das metallfreie Sekundärelement ist problemlos zu entsorgen. Vlies, PUR-Schaum-Endscheiben, Kunststoff-Mittelrohr und -Griff können beispielsweise thermisch entsorgt werden.

Weil der Filtereinsatz 21 an beiden Stirnseiten eine Stirnseitenabdichtung aus PUR-Schaum aufweist, ist es ohne weiteres möglich, diesen Filtereinsatz auch auszuklopfen und von der Schmutzschicht zu befreien. Die elastischen Endscheiben werden dabei nicht beschädigt, wie dies beispielsweise bei Blechendscheiben der Fall wäre.

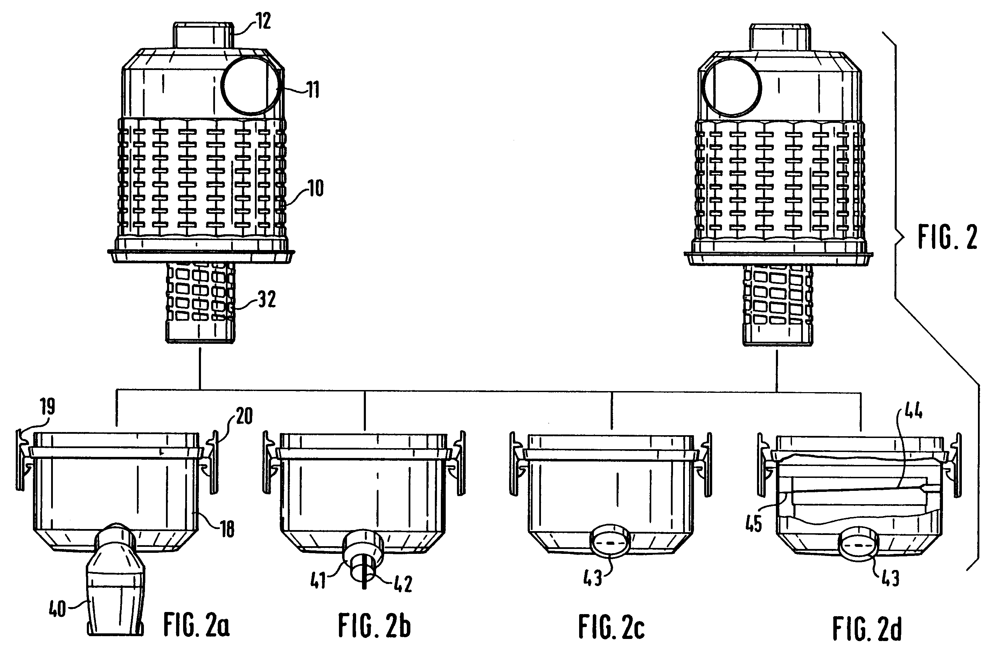

Figur 2 zeigt das Filtergehäuse 10 mit dem Rohlufteinlaß 11 dem Reinluftauslaß 12 sowie dem Stützrohr 32. Unterhalb dieses Filtergehäuses sind die verschiedenen Gehäusedeckel 18 mit den Rastelementen 19, 20 dargestellt.

In Figur 2a ist ein Staubentleerventil an der in Figur 1 gezeigten Staubaustragöffnung befestigt. Dieses Staubentleerventil weist im unteren Bereich eine Lippenöffnung auf. Bei Druckpulsationen, die über den Reinluftauslaß 12, ausgehend von einer Brennkraftmaschine in das Filtergehäuse rückwirken, erfolgt ein kurzfristiges öffnen dieser Lippenöffnung, so daß der in dem Staubentleerventil 40 bzw. dem unteren Bereich des Deckels 18 angesammelte Schmutz austreten kann.

Die Figur 2b zeigt eine Variante eines Staubentleerventils 41. Dieses weist eine geringe Baugröße auf und ist mit einer Lippenöffnung 42 versehen, die besonders dort zum Einsatz gelangt, wo größere Rückpulsationen auftreten.

In Figur 2c ist ein Gehäusedeckel dargestellt, der mit einem Schirmventil 43 versehen ist. Dieses Schirmventil öffnet bereits bei sehr geringen Druckdifferenzen und nutzt damit geringfügige Druckschwankungen zum Entleeren des Staubes aus dem Deckel aus.

Auch in Figur 2d ist ein Schirmventil 43 angeordnet. Hier ist im Deckel zusätzlich ein Zwischenboden 44 integriert. Dieser weist im Bereich 45 eine Öffnung auf. Durch diese Öffnung gelangt der Staub von dem Rohluftbereich des Filters in den Raum unterhalb des Zwischenbodens.

Aufgrund der Zyklonwirkung des im Rohluftbereich angeordneten Zyklonvorabscheiders, welcher in Figur 1 mit den Leitschaufeln 46, 47 dargestellt ist, bildet sich eine Luftströmung, die zu einem Staudruck unterhalb des Zwischenbodens führt. Dieser Staudruck betätigt das Schirmventil 43, so daß auch hier der Staub bzw. der Schmutz ausgetragen wird. Durch das Öffnen des Schirmventils 43 sinkt der Staudruck ab, so daß anschließend dieses Ventil wieder schließt und bis zum Ansteigen des Staudrucks geschlossen bleibt. Damit wird ein zyklischer Staubaustrag gewährleistet.

## Patentansprüche

1. Luftfilter, insbesondere für die Reinigung von Verbrennungsluft für Brennkraftmaschinen mit einem im wesentlichen zylindrischen Gehäuse (10), welches einen Rohlufteinlaß (11) und einen Reinluftauslaß (12) aufweist, wobei der Reinluftauslaß (12) im wesentlichen konzentrisch an einer Stirnseite des zylinderförmigen Gehäuses angeordnet ist und der Rohlufteinlaß (11) an der Mantelfläche des Gehäuses angeordnet ist und wobei im Gehäuse (10) ein im wesentlichen metallfreier Filtereinsatz (21) befestigt ist, dadurch gekennzeichnet, daß eine Gehäuseöffnung mit adaptivem Deckel (18), welcher ein darin integriertes Schmutzaustragsorgan (40 bis 45) aufweist, verschließbar ist, wobei in Abhängigkeit von dem verwendeten Schmutzaustragsorgan (40 bis 45) ein daran angepaßter Gehäusedeckel (18) verwendet wird und damit ein Teil der Funktion des Schmutzaustrages in den Deckel (18) verlegt ist.

2. Luftfilter nach Anspruch 1, dadurch gekennzeichnet, daß im Bereich des Rohlufteinlasses ein Zyklon (46, 47) zur Staubvorabscheidung vorgesehen ist.

3. Luftfilter nach Anspruch 1 oder 2, dadurch gekennzeichnet, daß das adaptive System (18) durch den Gehäusedeckel gebildet ist.

4. Luftfilter nach Anspruch 3, dadurch gekennzeichnet, daß der Schmutzaustrag ein Staubentleerventil (41) ist, wobei im Gehäusedeckel ein Schmutzsammelraum vorgesehen ist.

5. Luftfilter nach Anspruch 3, dadurch gekennzeichnet, daß der Schmutzaustrag ein Staubentleerventil (40) ist, welches einen Schmutzsammelraum aufweist.

6. Luftfilter nach Anspruch 3, dadurch gekennzeichnet, daß der Schmutzaustrag mit einem Schirmventil (43) erfolgt.

7. Luftfilter nach Anspruch 6, dadurch gekennzeichnet, daß im Gehäusedeckel ein Zwischenboden (44) mit einer Öffnung (45) vorgesehen ist.

8. Luftfilter nach einem der vorherigen Ansprüche, dadurch gekennzeichnet, daß der integrierte Schmutzaustrag mit einer Einrichtung zum Absaugen des Schmutzes verbunden ist.

## Claims

1. Air filter, more especially for filtering combustion air for internal combustion engines, having a substantially cylindrical housing (10), which includes an unfiltered air inlet (11) and a filtered air outlet (12), the filtered air outlet (12) being disposed substantially concentrically on an end face of the cylindrical housing, and the unfiltered air inlet (11) being disposed on the surface of the housing, and a substantially metal-free filter insert (21) being mounted in the housing (10), characterised in that a housing opening is closable with an adaptive cover (18), which includes a contaminants discharging means (40 to 45) incorporated therein, a housing cover (18), which is adapted to the contaminants discharging means (40 to 45), being used in dependence on said contaminants discharging means used and, in consequence, a portion of the function of the contaminants discharging means being transferred to the cover (18).

2. Air filter according to claim 1, characterised in that a cyclone (46, 47) for the preliminary separation of dust is provided in the region of the unfiltered air inlet.

3. Air filter according to claim 1 or 2, characterised in that the adaptive system (18) is formed by the housing cover.

4. Air filter according to claim 3, characterised in that the contaminants discharging means is a dust discharging valve (41), a contaminants receiving chamber being provided in the housing cover.

5. Air filter according to claim 3, characterised in that the contaminants discharging means is a dust discharging valve (40), which has a contaminants receiving chamber.

6. Air filter according to claim 3, characterised in that the contaminants are discharged by means of a screening valve (43).

7. Air filter according to claim 6, characterised in that an intermediate base (44) is provided with an opening (45) in the housing cover.

8. Air filter according to one of the previous claims, characterised in that the incorporated contaminants discharging means is connected to an apparatus for removing the contaminants by suction.

## Revendications

1. Filtre à air, destiné en particulier à épurer l'air de combustion de moteurs à combustion interne, comprenant un boîtier (10) éventuellement cylindrique présentant une entrée d'air brut (11) et une sortie d'air épuré (12), cette dernière étant essentiellement concentrique à une face frontale du boitier cylindrique tandis que l'entrée d'air brut (11) est montée sur la surface enveloppe du boîtier, un insert filtrant (21), essentiellement non métallique, étant fixé dans le boitier,
caractérisé en ce qu'
une ouverture du boîtier peut être fermée par un couvercle adaptatif (18) dans lequel est intégré un organe d'évacuation des saletés (40 à 45) de sorte qu'en fonction de l'organe d'évacuation (40 à 45) utilisé, on met en oeuvre un couvercle de boîtier (18) adapté à cet organe ce qui fait qu'une partie de la fonction d'évacuation des saletés est déposée dans ce couvercle (18).

2. Filtre à air selon la revendication 1,
caractérisé en ce qu'
un cyclone (46, 47) est prévu dans la zone d'entrée de l'air brut, pour séparer les poussières.

3. Filtre à air selon la revendication 1 ou 2,
caractérisé en ce que
le système adaptatif (18) est constitué par le couvercle du boîtier.

4. Filtre à air selon la revendication 3,
caractérisé en ce que
l'évacuation des saletés se fait par une soupape de vidange de la poussière (41) une chambre collectrice des saletés étant prévue dans ce couvercle du boîtier.

5. Filtre à air selon la revendication 3,
caractérisé en ce que
l'évacuation des saletés se fait par une soupape de vidange de la poussière (40) qui comporte une chambre collectrice des saletés.

6. Filtre à air selon la revendication 3,
caractérisé en ce que
l'évacuation des saletés s'effectue en utilisant une soupape écran.

7. Filtre à air selon la revendication 6,
caractérisé en ce qu'
il est prévu dans le couvercle du boîtier un fond intermédiaire (44) percé d'une ouverture (45).

8. Filtre à air selon une des revendications précédentes,
caractérisé en ce que
la sortie intégrée des saletés est reliée à un dispositif d'aspiration des saletés.
